# EUROPEAN PATENT APPLICATION

(11) **EP 2 434 736 A1**
(43) Date of publication of application: **28.03.2012**
(21) Application number: 11006643.8
(22) Date of filing: 12.08.2011
(51) Int. Cl.: H04M 3/22, G06Q 30/00, H04L 29/06, H04M 3/487, H04M 7/00

(54) **Systems and methods for online call measurement**

(30) Priority: 24.09.2010 US 386109 P; 05.07.2011 US 175992
(71) Applicant: Telmetrics Inc., Mississauga ON L4W 5L6 (CA)
(72) Inventor: Dugard, Jason, Waterdown Ontario L0R 2H5 (CA); Lauwaert, Michael, Georgetown Ontario L7G 5W4 (CA)
(74) Representative: Thompson, Trevor George

(57) **Abstract**

Systems and methods for call measurement services. The system is operatively coupled to a communication network. An advertisement accessible via the communication network is provided, wherein the advertisement includes an inbound address. The call measurement system includes a routing system operatively coupled to the communication network and configured to receiving an originating voice communication corresponding to the inbound address. The system also includes an address database operatively coupled to the routing system. The address database stores an outbound address corresponding to the inbound address. The routing system is also configured to connect the originating voice communication to the outbound address.

## Description

### Priority

This application claims priority from US provisional patent application no. 61/386,109, filed September 24, 2010, and regular U.S. patent application 131175,992, filed July 5, 2011. The applications are incorporated herein by reference.

### Field of the invention

The present invention relates generally to the field of online telecommunications, with common but by no means exclusive application to measuring the effectiveness of online advertising media by tracking the online telephone calls made in response to a particular advertisement.

### Background of the invention

There is a growing need for business to justify their advertising expenditures. Businesses must evaluate the response to a marketing initiative, in order to determine if their marketing dollars are being spent wisely. Online advertising forms a significant portion of modern advertising campaigns.

However, counting the number of telephone calls to a company may not provide an accurate measurement of the success of the marketing initiative. Telemarketing calls and other calls unrelated to an advertisement will skew the data.

Accordingly, the inventors have recognized a need for improved systems and methods for call measurement in response to online advertising.

### Summary of the invention

In one aspect, the present invention is directed towards a call measurement system operatively coupled to a communication network. The call measurement system has an advertisement accessible via the communication network, wherein the advertisement includes an inbound address. The call measurement system also includes a routing system operatively coupled to the communication network and configured to receiving an originating voice communication corresponding to the inbound address, and an address database operatively coupled to the routing system. The address database stores an outbound address corresponding to the inbound address. The routing system is also configured to connect the originating voice communication to the outbound address. The address database may also store the inbound address.

In some instances, the call measurement system may also include a call tracking database configured to store call tracking data corresponding to the originating voice communication. In some instances, for example, the call tracking data may include duration data corresponding to the duration of the originating voice communication.

The call measurement system may further include a termination communication device operatively coupled to the outbound address.

In some implementations, the address database may store a plurality of inbound addresses and may also store a plurality of outbound addresses. Each inbound address may correspond to only one outbound address. As well, each inbound address and outbound address may include or be in the form of a URI (Uniform Resource Identifier).

Additionally, for some implementations, the call measurement system may also include an originating communication device operatively coupled to the communication network, wherein the originating voice communication originates from the originating communication device. The originating communication device may be configured to receive the inbound address from the advertisement. The communication network may, for example, include the Internet, and the advertisement may be accessible on the Internet by the originating communication device using a web browser.

In another aspect, the present invention is directed to an address database operatively coupled to a communication network. The address database is configured to store at least one inbound address such that each inbound address corresponds to a corresponding advertisement accessible via the communication network. The address database is also configured to store at least one outbound address such that each outbound address corresponds to a termination communication device accessible via the communication network. Each outbound address also corresponds to an inbound address.

In some implementations, each inbound address may include or be in the form of a URI. Further, in some embodiments, each inbound address may include or be in the form of a URI. Additionally, in some variations each inbound address corresponds to only one outbound address.

In another aspect, the present invention is directed towards a method of call tracking comprising the following steps:
(a) providing an address database storing:
   (i) an outbound address, wherein the outbound address corresponds to an inbound address, and wherein the inbound address corresponds to an advertisement accessible via the communication network;
(b) receiving an originating voice communication corresponding to the inbound address; and
(c) routing the originating voice communication to the outbound address.

The method may also include providing the advertisement accessible via the communication network, wherein the advertisement comprises the inbound address. The method may further include accessing the advertisement and initiating the originating voice communication. As well, the method may include storing call tracking data corresponding to the originating voice communication.

The method may further include providing a call tracking database configured to store call tracking data corresponding to the originating voice communication.

### Brief description of the drawings

The present invention will now be described, by way of example only, with reference to the following drawings, in which like reference numerals refer to like parts and in which:

FIGURE 1 is a schematic diagram of a call measurement system made in accordance with the present disclosure.

FIGURE 2 is a schematic diagram illustrating among other things, example data as may be stored in the data storage of Figure 1;

FIGURE 3 is a diagram of an example advertisement incorporating an inbound address, as may be used in conjunction with the call measurement system of Figure 1; and

FIGURE 4 is a flow diagram illustrating the steps of methods of the present disclosure.

### Detailed description of the invention

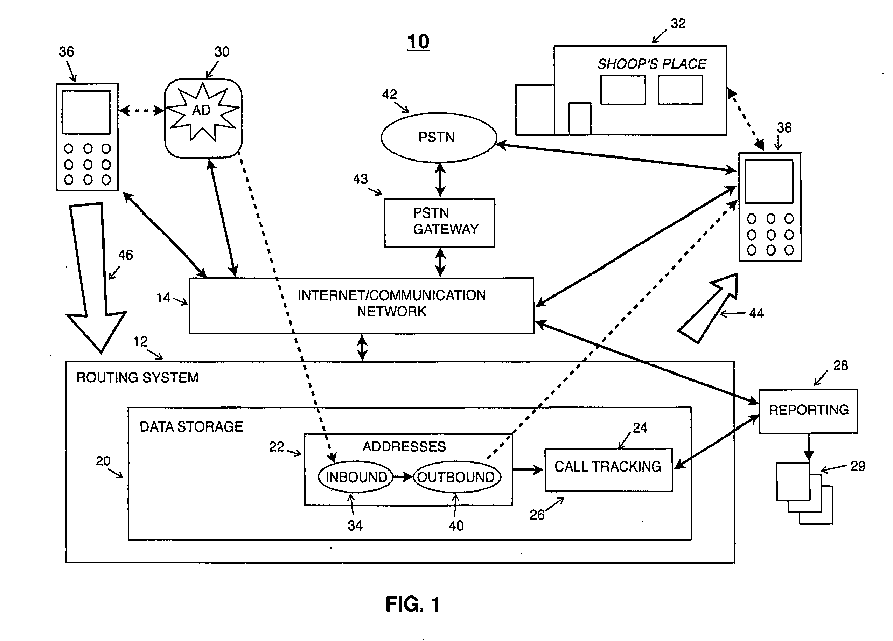

Referring to Figure 1, illustrated therein is a call measurement system (CMS), referred to generally as 10, made in accordance with the present disclosure. The CMS 10 comprises a routing system 12 which is operatively coupled to the Internet 14 or other communication network for the exchange of data including the receiving and placing of telephone calls or other voice communication (for example using Session Initiated Protocol (SIP) or other voice over internet protocol (VoIP) or any other appropriate multimedia communication protocol). As will be understood, the software and hardware components capable of initiating and receiving calls using VoIP, such as a suitably configured and programmed server, may comprise part of the routing system 12. While SIP is illustrated and discussed herein in explaining various embodiments of the present disclosure, such references to SIP are merely exemplary - other communication protocols may be used, as will be understood.

Those skilled in the art can also appreciate that there are existing and emerging technologies for networked telephony communication and that the spirit and intention of the present disclosure is to include the application of existing and emerging telephony technologies.

SIP is an application-layer control (signaling) protocol for creating, modifying and terminating online sessions with one or more participants. These sessions include Internet multimedia conferences, Internet telephone calls and multimedia distribution.

SIP as defined in RFC 3261 is an application-layer control protocol that supports IP-based multimedia streaming. It is used to establish, maintain, modify and terminate multimedia sessions between two or more end points. SIP provides the control plane for these sessions. The corresponding data plane for such sessions is described by Session Description Protocol (SDP). The data plane and control plane may be routed through different paths between end points. Once the control plane or path is established and the communication is allowed between the endpoints, the data stream may be sent directly along its own data plane or path.

The data plane contains information pertaining to the session itself (i.e. subject, time-to-live, media info). RTP (Real-time Transport Protocol) is one of many (possible) transports which may be described by SDP (as carried in a corresponding SIP message). RTP in the context of SIP, would be an 'out of band' means for delivering audio and/or video. Without intending to be limiting, other SDP transports could include IP (Internet Protocol), UDP (User Datagram Protocol), H.320, etc.

The SIP protocol enables the determination of the location of the target end point as well as the target end point's availability (and a reason for any determined unavailability). In addition to providing an indication of whether the end point is available, if a call cannot be completed because the target end point is unavailable, SIP may also determine whether the called party is already on the phone or did not answer in the allotted number of rings. In addition to other functionality, SIP enables the establishment, management and ultimate termination of a session between the originating and target end point(s).

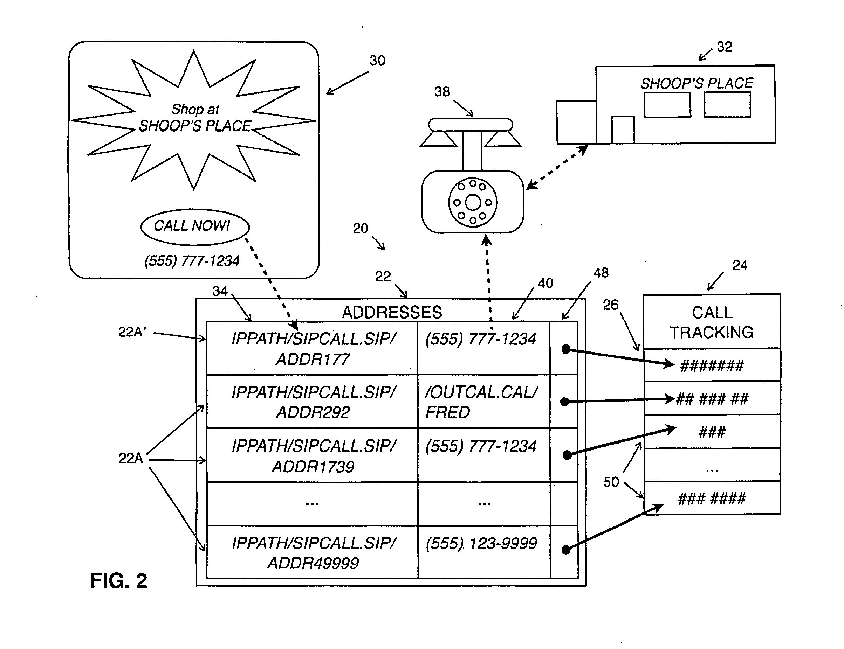

Referring again to Figure 1, data storage 20 is also provided, although as will be understood, the storage 20 and/or portions of it may comprise part of the routing system 12. As well, the storage 20 may be local to or remote from the routing system 12 server and portions of the data stored may be stored in different physical or electronic storage locations. The data storage 20 includes an address database 22 storing address data records 22A (shown in Figure 2). The data storage 20 also preferably includes a call tracking database 24 storing tracked call data 26. The various types of data may be stored in different configurations than has been illustrated herein for explanatory purposes.

The CMS 10 may also include a reporting module 28 operatively coupled to the call tracking database 24 and configured to generate reports or reporting records 29 reporting and/or summarizing the calling activity based on tracked call data 26: The reporting module 28 may be configured to be accessed by clients 32 (discussed below) via the Internet 14, and generates reports 29 on calling activity based on tracked call data 26 stored in the call tracking database 24.

The CMS 10 may be configured and programmed to permit a client to interact with the reporting module 28 via the Internet 14 for example using Transmission Control Protocol/Internet Protocol (TCP/IP). The CMS 10 may be contacted using hypertext transport protocol in a secure or unsecured method (HTTP/HTTPS) to obtain the call measurement reports 29 generated by the reporting module 28. In addition the CMS 10 may be configured to send such reports to the client 32 (discussed below) via the Internet 14 using email via the Simple Mail Transfer Protocol (SMTP).

Referring briefly to Figures 1 - 3 simultaneously, the CMS 10 may also include an advertisement 30. Typically, the advertisement 30 will be accessible over the communication network 14. The advertisement 30 advertises or otherwise corresponds to a business or service 32 client of the CMS. As will be discussed in greater detail, below, the advertisement 30 incorporates an inbound address 34 (typically an inbound URI) corresponding to the routing system 12. In some implementations, the inbound address 34 data may also be stored in an address data record 22A in the address database 22.

The advertisement 30 may be accessed by an originating communication device 36. Typically, the originating communication device 36 is configured to access the advertisement 30 via the communication network 14, using a web browser or similar software platform. For example, the advertisement 30 may be retrieved in an internet search and/or form part of an online directory. In some implementations, however, the advertisement 30 may be included in an application (such as a business pages directory application) stored and running on the originating communication device 36. Alternatively, the advertisement 30 may include or be embedded in a barcode or other computer readable image (for example, on a poster or product) which can be scanned into a computer, smart phone or similar electronic device. Such a barcode may cause the scanning electronic device to direct its web browser to visit a particular web page or other data source, which may then be used to trigger the telephone call process described herein. In some variations, the barcode will cause the scanning electronic device to initiate a communication request to the inbound address 34.

As will be understood, the originating communication device 36 may be in the form of a computer, cell phone, smart phone, mobile phone or other electronic device operatively coupleable to the communication network 14 and suitably configured to be able to participate in a voice communication. Without limitation, in order to participate in a voice communication the originating communication device 36 may include a microphone and one or more speakers or earphones.

A terminating communication device 38 may also be provided, which corresponds to the business or service 32 advertised in the advertisement 30. The termination communication device 38 is configured to receive a voice communication at an outbound address 40 via the communication network 14. The termination communication device 38 may be in the form of a computer, cell phone, smart phone, mobile phone or other electronic device operatively coupleable to the communication network 14 and suitably configured to be able to participate in a voice communication. In some implementations, the termination communication device 38 may be in the form of a telephone operatively coupled to the PSTN (Public Switched Telephone Network) 42, which may in turn be coupled to the Internet 14 via a PSTN Gateway 43. As will be discussed in greater detail below, the outbound address 40 is stored in the address database 22 in an address record 22A corresponding to the inbound address 34.

In brief, as will be clarified in the following discussion, the routing system 12 is configured to receive an originating voice communication 46 (which may be initiated (by way of example only) in the form of an SIP request) addressed to the inbound address 34 and route or otherwise establish a outgoing voice communication 44 (which may also be initiated (by way of example only) in the form of an SIP request) to the corresponding outbound address 40.

As will be understood, reference herein to an originating voice communication 46 and to an outbound voice communication 44 should be understood to include the various requests to establish such communication links. For example, a request received by the routing system 12 to establish an originating voice communication 46 is, for the purposes herein, considered to be the "originating voice communication 46", since in some implementations no data plane (for transmitting voice communication data) will be established if the corresponding outbound request generated by the routing system 12 to establish the outgoing voice communication 44 is denied (for example, if the termination device 38 is busy). Correspondingly, the outbound request as may be generated by the routing system 12 in some implementations is, for the purposes herein, considered to be the outbound voice communication 44.

Referring briefly to Figure 2, illustrated therein is sample address data as may be stored in the address data records 22A, and illustrating the relationship of such address data to other structures which may form part of the call management system 10. The address database 22 is configured to store at least one, and will typically store a plurality of address data records 22A. Each address data record 22A may store an outbound address 40, often in the form of a URI. The example data records 22A are illustrated as storing an inbound address 34 (also often in the form of a URI). However, storing each inbound address 34 may not be required to the extent the inbound address 34 describes a pathway to the location of the data record 22A storing the corresponding outbound address 40.

Each outbound address 40 corresponds to a termination device 38. As such, an outbound address 40 may comprise or otherwise correspond to a URI for the termination device 38. As illustrated for example by record 22A', the outbound address 40 may correspond to a phone number for a telephone accessible through the PSTN.

As will be understood, each inbound address 34 may be unique. An inbound address 34 will typically correspond to a pathway pointing to a particular data storage location (which may be a file or record name typically of any desired combination of alphanumeric characters). As a result, a virtually infinite number of inbound address 34 identifiers may be used. This enables a particular advertisement or advertising campaign to be assigned a unique inbound address 34, thereby facilitating the tracking of the effectiveness of such advertisement or campaign. Each outbound address 40 corresponds to an inbound address 34. Typically, each inbound address 34 corresponds uniquely to a single outbound address 40, while an outbound address 40 may correspond with more than one inbound address 34. One skilled in the art will appreciate that this facilitates the tracking of the effectiveness of multiple different advertisements or campaigns for a particular business or service (corresponding to the outbound address 40) which may occur simultaneously or at different points in time.

In some implementations, however, an inbound address 34 may correspond to multiple outbound addresses 40 (each of which corresponds to the same client 32). For example, such a configuration may be advantageous if the client 32 has multiple retail locations or stores or call centres and it is desirable to route the originating voice communication 46 to an outbound address 40 corresponding to a physical location proximate that of the originating communication device 36. Similarly, such a configuration might be desirable if a call answering service having multiple call centres is to be used to receive the originating voice communications 46. As will be understood, if the originating communication device 36 is located in France, it might be desirable to route the originating voice communication 46 to an outbound address 40 corresponding to a physical location in France and/or to a call centre location able to communicate in French. For such a configuration, appropriate location and/or language capability data for each outbound address 40 would typically be stored in the address database 22. Furthermore, the routing system 12 would be configured to determine a physical location of the originating communication device 36 based on the URI of the device 36 and/or the IP path information contained in the SIP request 46.

Each address record 22A may also store call tracking data 26 for the originating 46 and/or termination 44 voice communications corresponding to the inbound address 34. Alternatively, the call tracking database 24 may be separate from the address database 22 and each address record 22A may store a call tracking link 48 to a corresponding call tracking record 50 in the call tracking database 24 which stores the tracked call data 26. By way of example only, the tracked call data 26 may include for each corresponding inbound address 34 the volume of calls, call disposition (eg. answered, unanswered, blocked, or a busy signal was returned, etc.), the time each call was initiated, call duration of the calls, how many rings occurred before the call was answered, or other data that may be used to measure performance or other aspects of the telephone calls. The call tracking data 26 may also include the URI corresponding to the originating communication device 36. Other types of call tracking data may be tracked and stored for particular applications, as will be understood.

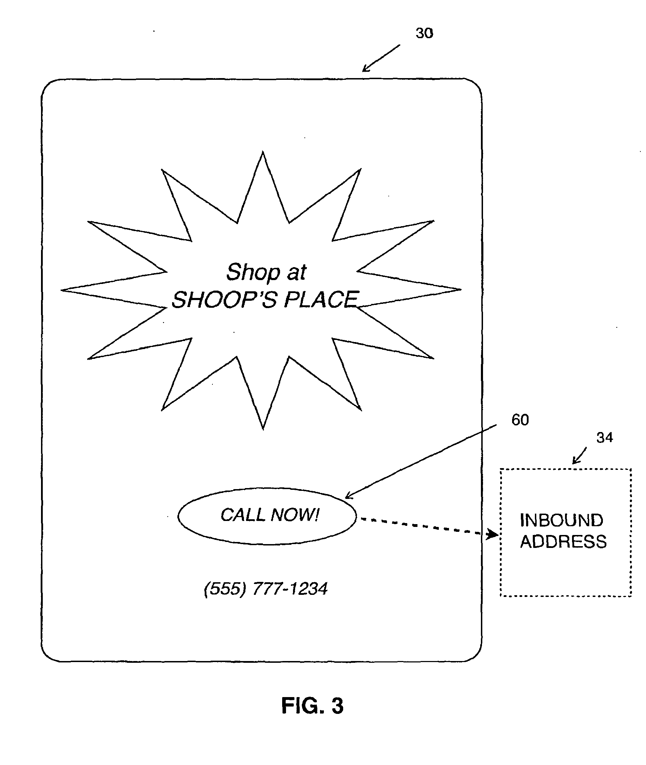

Turning briefly to Figure 3, illustrated therein is an example advertisement 30 for a business (or service) and which displays or otherwise indicates an opportunity to initiate a voice communication (referred to generally herein as a "telephone call" without intending to be limited to POTS (Plain Old Telephone Service)). In the illustrated example, the advertisement 30 may include a "Call Now!" button 60 or other interactive functionality allowing a user viewing or otherwise accessing the advertisement 30 on the communication network 14 to initiate a telephone call to the advertised business. For example, instead of a "Call Now!" button, an advertisement 30 may include text (such as a phone number) which is configured to act as a hypertext link to initiate the telephone call process discussed below.

As will be understood, the advertisement 30 is made up of one or more data/software files and includes the appropriate software code and inbound address 34 data to cause the browser or other client application of the originating communication device 36 to initiate a request to the routing system 12 for the establishment of an originating voice communication link 46 between the routing system 12 and the originating communication device 36. The software code and inbound address 34 data will typically be transparent or invisible to the viewer of the advertisement 30.

The "invisibility" of the inbound address 34 data (together with the uniqueness of the inbound address 34) improves the integrity of the call tracking data discussed below, by minimizing the possibility of telemarketers (and other non-potential customers of the client business 32) from accidentally (or otherwise) initiating a call which would be tracked by the CMS 10. This approach may be contrasted with call tracking systems which use temporarily assigned phone numbers (which are redirected to the advertising client's actual phone number) and are vulnerable to receiving undesired calls from telemarketers and others (eg. misdialed numbers) - such undesired calls may skew the call tracking results obtained by such call tracking systems.

The advertisement 30 may or may not display a telephone number for the advertised business 32. As noted above, upon receipt of such a request, the routing system 12 then initiates a request to the corresponding outbound address 36 to establish an outgoing voice communication link 44 to the termination device 38.

Furthermore, if the advertisement 30 does display a telephone number, it should be understood that the outbound address 40 corresponding to the advertisement 30 may or may not also correspond to the displayed telephone number. For example, the telephone call initiated by the advertisement 30 may be directed to be received by an offsite call answering service and/or to someone intended to receive such calls through their computer or similar electronic device and not through a telephone (thereby potentially reducing the number of calls received by the business through PSTN and the number of telephone lines which may be required by the advertised business).

Furthermore, while the advertisement 30 has been illustrated as a simple, static ad, it should be understood that without limitation the advertisement 30 may include a multimedia display of some form. As well, for the purposes herein, the advertisement 30 is not required to be a "stand alone" advertisement, but may include a portion of a webpage (or email) or other type of document or information display configured to direct viewers to contact a referenced business or service. In some implementations, the advertisement 30 may be implemented as an online application (for example, an applet) or a physical display of the advertisement in another media in whole or in part.

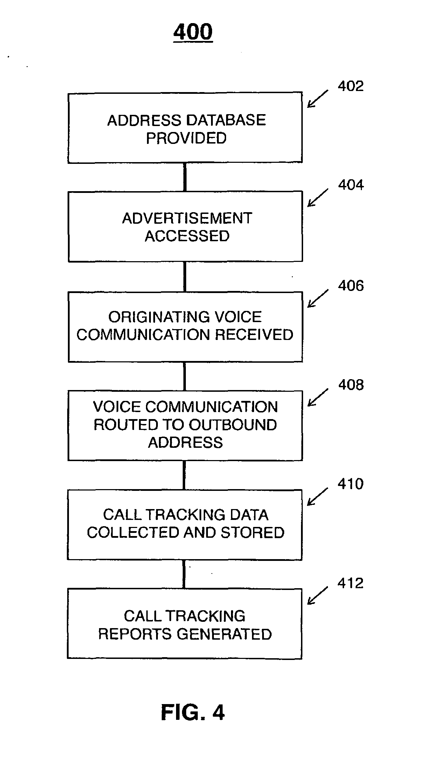

Referring now to Figure 4, this figure is a flow chart setting out a method 400 of call tracking in accordance with the present disclosure. An address database 22 may be provided which stores at least one outbound address 40 (Block 402). Each outbound address 40 corresponds to an inbound address 34, each of which in turn corresponds to an advertisement 30 accessible via the communication network 14.

A user may access an advertisement 30 incorporating the inbound address 34 (Block 404). The user does so using an originating communication device 36. As noted above, typically the advertisement 30 is accessed via the communication network 14. An originating voice communication 46 (or request) corresponding to the inbound address 34 may then be received by the routing system 12 (Block 406). As noted above, this step may for example, be triggered by the user selecting a "Call Now!" button 60 or otherwise indicating a desire to initiate a telephone call to the advertised business 32, thereby launching corresponding code contained in the advertisement 30 for the web browser operating on the originating communication device 36 to initiate a request, such as an SIP request, to establish the originating voice communication link 46.

The originating voice communication 46 may then be routed to the corresponding outbound address 40 (Block 408). The routing system 12 may accomplish this by initiating an outgoing voice communication 44 using the corresponding outbound address 40. The routing system 12 may initiate a request, such as an SIP request, to the termination device 38 at the outbound address 40 in order to establish the outbound voice communication link 44. The routing system 12 may then "connect" the originating voice communication 46 and the outgoing voice communication 44. By staying "on the call", the routing system 12 may then track and store call tracking data corresponding to the call (Block 410). Ultimately, call tracking reports 29 corresponding to the call tracking data 26 stored in the call tracking database 28 may be generated (Block 412).

Thus, while what is shown and described herein constitute preferred embodiments of the subject invention, it should be understood that various changes can be made without departing from the subject invention, the scope of which is defined in the appended claims.

## Claims

1. A call measurement system (10) operatively coupled to a communication network (14) for use with an advertisement accessible via the communication network, wherein the advertisement (30) comprises an inbound address (34), the call measurement system comprising:
(a) a routing system (12) operatively coupled to the communication network and configured to receiving an originating voice communication (46) corresponding to the inbound address;
(b) an address database (22) operatively coupled to the routing system;
(i) wherein the address database stores an outbound address (40) corresponding to the inbound address;
(c) wherein the routing system is configured to connect the originating voice communication to the outbound address.

2. The call measurement system of Claim 1, further comprising a call tracking database (24) configured to store call tracking data (26) corresponding to the originating voice communication.

3. The call measurement system of any preceding claim, further comprising a termination communication device (38) operatively coupled to the outbound address (40).

4. The call measurement system of any preceding claim, wherein the address database (22) stores a plurality of outbound addresses (40).

5. The call measurement system of Claim 4, wherein the inbound address (34) corresponds to only one outbound address (40).

6. The call measurement system of any preceding claim, wherein the inbound address (34) corresponds to a URI.

7. The call measurement system of any preceding claim, further comprising an originating communication device (36) operatively coupled to the communication network (14), wherein the originating voice communication (46) originates from the originating communication device.

8. The call measurement system of Claim 7, wherein the originating communication device (36) is configured to receive the inbound address (34) from the advertisement (30).

9. The advertisement (30) for use with the call measurement system of any preceding claim.

10. An address database (22) operatively coupled to a communication network (14), wherein the address database is configured to store:
(a) at least one inbound address (34);
(i) wherein each inbound address corresponds to a corresponding advertisement (30) accessible via the communication network;
(b) at least one outbound address (40);
(i) wherein each outbound address corresponds to a termination communication device (38) accessible via the communication network (14); and
(ii) wherein each outbound address corresponds to one of the inbound addresses (34).

11. The address database (22) of Claim 10, wherein each inbound address (34) corresponds to a URI.

12. The address database (22) of Claim 10 or 11, wherein each inbound address (34) corresponds to only one outbound address (40).

13. A method of call tracking comprising the following steps:
(a) providing an address database (22) storing:
(i) an outbound address (40);
(1) wherein the outbound address corresponds to an inbound address (34),
(2) wherein the inbound address corresponds to an advertisement (30) accessible via a communication network (14);
(b) receiving an originating voice communication (46) corresponding to the inbound address (34); and
(c) routing the originating voice communication to the outbound address.

14. The method of Claim 13, further comprising accessing the advertisement (30) and initiating the originating voice communication (46).

15. The method of Claim 13 or 14, further comprising storing call tracking data (26) corresponding to the originating voice communication (46).
